# EUROPEAN PATENT APPLICATION

(11) **EP 4 674 680 A1**
(43) Date of publication of application: **07.01.2026**
(21) Application number: 25185302.4
(22) Date of filing: 25.06.2025
(51) Int. Cl.: B60N 2/02, B60N 2/26, B60N 2/28, B60N 2/42, B60N 2/427, B60N 2/56, B60N 2/879

(54) **MULTIFUNCTIONAL SIDE IMPACT BLOCK CONTROL SYSTEM AND CHILD SAFETY SEAT COMPRISING SAME**

(30) Priority: 03.07.2024 CN 202410887603
(71) Applicant: Max-Inf (Ningbo) Baby Product Co., Ltd., Ningbo City, Zhejiang Province 315000 (CN)
(72) Inventor: XU, Hao, Ningbo City, Zhejiang Province, 315000 (CN)
(74) Representative: Lorenz Seidler Gossel Part. mbB

(57) **Abstract**

The present invention discloses a multifunctional side impact block control system and a child safety seat including the same. The multifunctional side impact block control system includes a seat body, a side impact block movably mounted on a left side surface and/or a right side surface of the seat body, a main controller, and a functional module integrated in the side impact block. The side impact block and the functional module are in communication connection with the main controller. The functional module includes one or more of an interaction unit, an entertainment unit, an environment adjustment unit, a safety unit, and a welcoming unit. The side impact block movably mounted on the side surface of the seat body can be easily operated by a user, making the interaction more intuitive and providing a control region that better meets the requirements in practical applications, thereby providing great convenience.

## Description

### TECHNICAL FIELD

The present invention relates to the technical field of safety products for vehicles, and specifically to a multifunctional side impact block control system and a child safety seat including the same.

### BACKGROUND

With the increase of electric functions of child safety seats, consumers face many inconveniences when controlling these functions, such as poor layout design and unfriendly interaction of keys, inaccurate recognition and high power consumption of voice control, and high false recognition rate of the automatic welcome mode.

Intelligent functions of child safety seats are also becoming increasingly diversified, but the integration of these functions is limited by the volume, weight, laws and regulations, costs, and consumers' personalized needs. Conventional schemes of designing such functions on a child safety seat have poor scalability and high costs, failing to meet consumers' personalized needs and making it difficult to implement the functions in practical applications.

### SUMMARY

To solve at least one of the above problems, the present invention first provides a multifunctional side impact block control system, including a seat body, a side impact block movably mounted on a left side surface and/or a right side surface of the seat body, a main controller, and a functional module integrated in the side impact block, where the side impact block and the functional module are in communication connection with the main controller; the functional module includes one or more of an interaction unit, an entertainment unit, an environment adjustment unit, a safety unit, and a welcoming unit; where
the interaction unit is configured to control a child safety seat to perform an interaction action; the entertainment unit is configured to control the side impact block or a mobile terminal to play a multimedia content; the environment adjustment unit is configured to control the side impact block to perform environment adjustment; the safety unit is configured to control the side impact block or the mobile terminal to send an occupant alert; and the welcoming unit is configured to control the child safety seat to perform a welcoming action.

Optionally, the multifunctional side impact block control system further includes a base, where an electric rotary adjustment assembly is further arranged between the seat body and the base, and the electric rotary adjustment assembly is in communication connection with the main controller; and the interaction unit is configured to control the child safety seat to perform the interaction action as follows: the interaction unit generates fifth interaction information upon receiving a touch and slide instruction from the side impact block, and upon receiving the fifth interaction information, the main controller controls the electric rotary adjustment assembly to drive the seat body to undergo electric rotary adjustment relative to the base; and
the side impact block is provided with a touch sensor, and a touch surface configured to receive a touch and slide operation performed by a user, the touch surface is located on an upper surface of the side impact block, the touch sensor is embedded below the touch surface, and the touch sensor is in communication connection with the main controller.

Optionally, the multifunctional side impact block control system further includes a headrest, where an electric height adjustment assembly is arranged between the headrest and the seat body, and the electric height adjustment assembly is in communication connection with the main controller; and the interaction unit is configured to control the child safety seat to perform the interaction action as follows: the side impact block is provided with a multi-point pressing surface, a multi-point lifting surface, a third pressure sensor, and a fourth pressure sensor, the multi-point pressing surface is located on an upper surface of the side impact block, the multi-point lifting surface is located on a lower surface of the side impact block, the third pressure sensor is embedded below the multi-point pressing surface, the fourth pressure sensor is embedded above the multi-point lifting surface, and the third pressure sensor and the fourth pressure sensor are in communication connection with the main controller; and the interaction unit generates sixth interaction information upon receiving force information from the third pressure sensor, the main controller controls the electric height adjustment assembly to drive the headrest to move downward relative to the seat body upon receiving the sixth interaction information, the interaction unit generates seventh interaction information upon receiving force information from the fourth pressure sensor, and the main controller controls the electric height adjustment assembly to drive the headrest to move upward relative to the seat body upon receiving the seventh interaction information.

Optionally, the entertainment unit is configured to control the side impact block or the mobile terminal to play the multimedia content as follows: the side impact block is configured for communication connection with the mobile terminal, a loudspeaker is built in the side impact block and is in communication connection with the main controller, the main controller controls the loudspeaker to play the multimedia content upon receiving a play instruction from a user, and upon detecting that the mobile terminal is in communication connection with the side impact block and receiving the play instruction from the user, the main controller controls the mobile terminal to play the multimedia content.

Optionally, the environment adjustment unit is configured to control the side impact block to perform the environment adjustment as follows: a fan is built in the side impact block and is in communication connection with the main controller, the side impact block is further provided with an air duct in communication with outside, and upon receiving a ventilation and heat dissipation instruction, the main controller controls the fan to operate to accelerate air flow; and/or
a humidifier is built in the side impact block and is in communication connection with the main controller, and upon receiving a humidification instruction, the main controller controls the humidifier to operate to humidify air; and/or
the side impact block is provided with a reading lamp in communication connection with the main controller, and upon receiving a turn-on instruction, the main controller controls the reading lamp to turn on to adjust ambient brightness.

Optionally, the safety unit is configured to control the side impact block or the mobile terminal to send the occupant alert as follows: an occupant alert device is built in the side impact block and is in communication connection with the main controller, the occupant alert device is configured for communication connection with the mobile terminal, and when the occupant alert device is in communication connection with the mobile terminal and the main controller determines that a distance between the occupant alert device and the mobile terminal exceeds a preset alert distance, the main controller controls the occupant alert device to send the occupant alert.

Optionally, the multifunctional side impact block control system further includes a base, where an electric rotary adjustment assembly is further arranged between the seat body and the base, and the electric rotary adjustment assembly is in communication connection with the main controller; and the welcoming unit is configured to control the child safety seat to perform the welcoming action as follows: an infrared sensor is built in the side impact block and is in communication connection with the main controller, and when the infrared sensor detects that a door of a vehicle is opening, the main controller controls the electric rotary adjustment assembly to operate to cause the seat body to rotate toward the door.

Optionally, the multifunctional side impact block control system further includes a base, where an electric angle adjustment assembly is arranged between the seat body and the base, and the electric angle adjustment assembly is in communication connection with the main controller; and the interaction unit is configured to control the child safety seat to perform the interaction action as follows: the interaction unit generates eighth interaction information upon receiving an instruction indicating that the side impact block moves relative to the seat body, and upon receiving the eighth interaction information, the main controller controls the electric angle adjustment assembly to drive the seat body to undergo electric angle adjustment relative to the base.

Optionally, the side impact block is slidably connected to the seat body along a length direction of the side impact block, the interaction unit generates first interaction information upon receiving an instruction indicating that the side impact block moves forward or backward relative to the seat body, and upon receiving the first interaction information, the main controller controls the electric angle adjustment assembly to drive the seat body to undergo electric angle straightening or electric angle tilting relative to the base; and/or
the side impact block is rotatably connected to the seat body, the interaction unit generates second interaction information upon receiving an instruction indicating that the side impact block rotates relative to the seat body, and upon receiving the second interaction information, the main controller controls the electric angle adjustment assembly to drive the seat body to undergo the electric angle straightening or the electric angle tilting relative to the base; and/or
the side impact block is provided with a pressing surface, a lifting surface, a first pressure sensor, and a second pressure sensor, the pressing surface is located on an upper surface of the side impact block, the lifting surface is located on a lower surface of the side impact block, the first pressure sensor is embedded below the pressing surface, the second pressure sensor is embedded above the lifting surface, and the first pressure sensor and the second pressure sensor are in communication connection with the main controller; the interaction unit generates third interaction information upon receiving force information from the first pressure sensor, the main controller controls the electric angle adjustment assembly to drive the seat body to undergo the electric angle tilting relative to the base upon receiving the third interaction information; the interaction unit generates fourth interaction information upon receiving force information from the second pressure sensor, and the main controller controls the electric angle adjustment assembly to drive the seat body to undergo electric angle straightening relative to the base upon receiving the fourth interaction information.

Compared with the prior art, according to the multifunctional side impact block control system of the present invention, the side impact block movably mounted on the side surface of the seat body can be easily operated by the user whether inside or outside the vehicle, making the interaction more intuitive and providing a control region that better meets the requirements in practical applications, thereby facilitating user operation. The integration of the functional module in the side impact block allows for the integration of functions such as electric function interaction, occupant alert, welcome, entertainment, and environment adjustment in the side impact block, thereby achieving diversified functions of the side impact block and improving the intelligent level of the system. With the modular design of the system, each functional module can be independently developed and maintained, thereby reducing the production and maintenance costs.

In addition, the present invention provides a child safety seat, including the multifunctional side impact block control system described above.

Compared with the prior art, the child safety seat of the present invention has the same advantages as those of the multifunctional side impact block control system compared with the prior art, so no more details will be described herein.

### BRIEF DESCRIPTION OF THE DRAWINGS

FIG. 1 is a structural view of a child safety seat according to an embodiment of the present invention.
FIG. 2 is a schematic structural view showing connection between contacts on a side impact block and contacts on a seat body according to an embodiment of the present invention.
FIG. 3 is a schematic view of a multifunctional side impact block control system according to an embodiment of the present invention.

### List of reference numerals:

1. seat body; 2. side impact block; 3. contact.

### DETAILED DESCRIPTION OF THE EMBODIMENTS

To make the objectives, technical features, and advantages of the present invention more comprehensible, specific embodiments of the present invention will be described in detail below with reference to the accompanying drawings.

In the description of the present invention, it should be understood that orientation or position relationships indicated by the terms such as "up" and "down" are orientation or position relationships based on the normal use of the product.

The terms "first" and "second" are used herein for descriptive purposes, and are not intended to indicate or imply relative importance or implicitly point out the number of the indicated technical features. Therefore, the feature defined by "first" or "second" may explicitly or implicitly include at least one such feature.

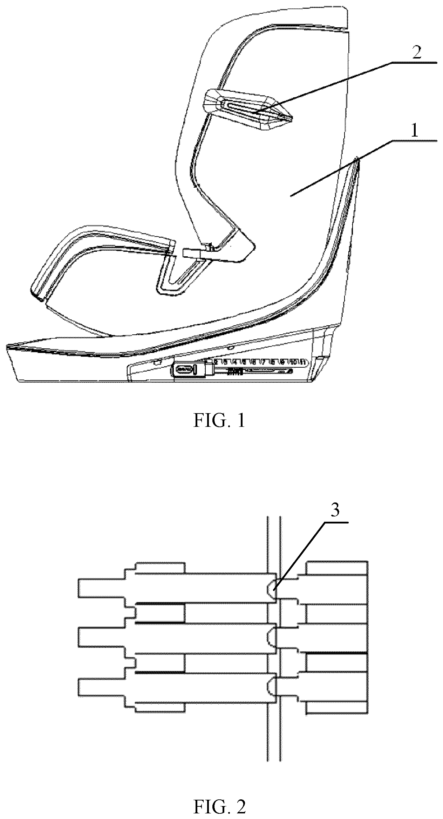

An embodiment of the present invention provides a multifunctional side impact block control system. Referring to FIG. 1, FIG. 2, and FIG. 3, the multifunctional side impact block control system includes a seat body 1, a side impact block 2 movably mounted on a left side surface and/or a right side surface of the seat body 1, a main controller, and a functional module integrated in the side impact block 2. The side impact block 2 and the functional module are in communication connection with the main controller. The functional module includes one or more of an interaction unit, an entertainment unit, an environment adjustment unit, a safety unit, and a welcoming unit.

The interaction unit is configured to control a child safety seat to perform an interaction action. The entertainment unit is configured to control the side impact block 2 or a mobile terminal to play a multimedia content. The environment adjustment unit is configured to control the side impact block 2 to perform environment adjustment. The safety unit is configured to control the side impact block 2 or the mobile terminal to send an occupant alert. The welcoming unit is configured to control the child safety seat to perform a welcoming action.

The side impact block 2 may be provided only on either or both of the left side surface and the right side surface of the seat body 1, to facilitate user operation and interaction. The main controller is in communication connection with the side impact block 2 and the functional modules integrated in the side impact block 2, and serves as a core control unit of the entire system to coordinate the operation of the functional modules. The communication connection between the side impact block 2 and the functional modules and the main controller is wired connection, wireless connection, or indirect connection. The wireless connection includes, but is not limited to, 433 MHz, 2.4 GHz, LoRa, Bluetooth, Wi-Fi, and other communication forms. The indirect connection includes, but is not limited to, NBIOT, 4G, 5G, BLE Mesh, Wi-Fi Mesh, and other communication forms. The wired connection may be electrical contact connection. The side impact block 2 is a module independent of the seat body 1, and may receive power from the child safety seat through contacts 3, or may be equipped with a battery and a charging interface.

The functional module includes one or a combination of more than one of the interaction unit, the entertainment unit, the environment adjustment unit, the safety unit, and the welcoming unit. The communication connection mode of the functional module is also one or a combination of more than one of the forms mentioned above. Therefore, a related configuration needs to be determined between a body of the child safety seat and the side impact block 2. A specific configuration process is as follows. The side impact block 2 is powered on to obtain its own configuration. The side impact block 2 sends the configuration to the body of the child safety seat or another terminal through the main controller. The body of the child safety seat or the another terminal configures a corresponding function according to the sent information, e.g., a data interaction function between the child safety seat and the side impact block 2, or an application interface of the another terminal. The body of the child safety seat or the another terminal performs conventional data interaction with the side impact block 2.

The side impact block 2 provides additional protection against side impact. The side impact block 2 has a function of resisting side impact and a function of product visual hammer. The side impact block 2 may also integrate various sensors to realize interaction operations of electric functions. The user may touch, press, or slide the side impact block 2 to trigger corresponding functions such as electric angle adjustment, electric rotary adjustment, or electric height adjustment. The side impact block 2 and the child safety seat may be connected wirelessly or through contacts 3. The contacts 3 may include power supply contacts, or may include power supply contacts and signal contacts. For a configuration without contacts, the side impact block 2 is equipped with a battery and a charging interface, and is wirelessly or indirectly connected to the child safety seat. For a configuration with only the power supply contacts, the side impact block 2 does not need to be equipped with a battery and a charging interface, and is wirelessly or indirectly connected to the child safety seat. For a configuration with both the power supply contacts and the signal contacts, the side impact block 2 is connected to the child safety seat through wired connection.

According to the multifunctional side impact block control system of this embodiment, the side impact block 2 movably mounted on the side surface of the seat body 1 can be easily operated by the user whether inside or outside the vehicle, making the interaction more intuitive and providing a control region that better meets the requirements in practical applications, thereby facilitating user operation. The integration of the functional module in the side impact block 2 allows for the integration of functions such as electric function interaction, occupant alert, welcome, entertainment, environment adjustment, and the like in the side impact block 2, thereby achieving diversified functions of the side impact block 2 and improving the intelligent level of the system. With the modular design of the system, each functional module can be independently developed and maintained, thereby reducing the production and maintenance costs.

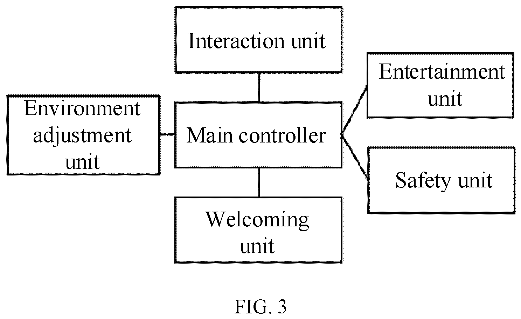

Optionally, as shown in FIG. 1 and FIG. 3, the multifunctional side impact block control system further includes a base, where an electric angle adjustment assembly is arranged between the seat body 1 and the base, and the electric angle adjustment assembly is in communication connection with the main controller; and the interaction unit is configured to control the child safety seat to perform the interaction action as follows: the interaction unit generates interaction information upon receiving an instruction indicating that the side impact block 2 moves relative to the seat body 1, and upon receiving the interaction information, the main controller controls the electric angle adjustment assembly to drive the seat body 1 to undergo electric angle adjustment relative to the base.

The main controller receives the interaction information from the interaction unit of the side impact block 2, and controls the electric angle adjustment assembly to adjust the seat body 1 relative to the base. As such, the main controller can promptly perform a corresponding angle adjustment upon receiving the interaction information, thereby improving the operation efficiency and user experience. The user can operate the side impact block 2 according to daily interaction habits to control the child safety seat to implement an electric angle adjustment function. For example, the user may the side impact block 2 to move forward or backward to straighten (i.e., make the seat back upright) or tilt the seat body 1. As such, the user can implement the adjustment intuitively. For another example, the user may rotate the side impact block 2 clockwise or counterclockwise to adjust the tilting angle of the seat body 1, which is user-friendly.

In an embodiment, the electric angle adjustment assembly may include a motor, a lead screw, a sliding seat, a supporting frame, a connecting rod, an angle sensor, and a position sensor. The motor, the angle sensor, and the position sensor are electrically connected to the main controller. The angle sensor and the position sensor are configured to monitor the current angle and position of the seat body 1. After receiving the interaction information from the interaction unit of the side impact block 2, the main controller controls the motor to operate. The motor is mounted in the base. The seat body 1 is slidably connected to an arc guide rail on the supporting frame through the connecting rod. A connecting shaft is mounted at a bottom of the seat body 1 and is connected to the sliding seat. The sliding seat is provided with a threaded hole and a mounting hole. The motor is connected to the base through a motor fixing member. The motor is configured to drive the lead screw to rotate to cause the sliding seat to move back and forth along the lead screw, thereby driving the connecting shaft to move in a sliding groove on the supporting frame. As such, the electric angle adjustment of the seat body 1 relative to the base is achieved.

In this embodiment, the angle adjustment of the seat body 1 can be controlled by moving the side impact block 2, so that the user can control the electric angle adjustment function of the child safety seat according to daily interaction habits, which is user-friendly and easily to learn, thereby improving the user experience.

Optionally, as shown in FIG. 1, FIG. 2, and FIG. 3, the side impact block 2 is slidably connected to the seat body 1 along a length direction of the side impact block 2, the interaction unit generates first interaction information upon receiving an instruction indicating that the side impact block 2 moves forward or backward relative to the seat body 1, and upon receiving the first interaction information, the main controller controls the electric angle adjustment assembly to drive the seat body 1 to undergo electric angle straightening or electric angle tilting relative to the base.

The specific structure of the sliding connection may be a structure in which a slide rail and a slide block slide are in sliding fit. A slide rail extending along the length direction of the side impact block 2 may be provided on the seat body 1, a slide block may be arranged protruding from the side impact block 2, and the slide block and the slide rail are in close fit to ensure that the side impact block 2 can move smoothly along the slide rail. After receiving an instruction indicating that the side impact block 2 moves backward relative to the seat body 1 under an external force, the interaction unit generates first interaction information. After receiving the first interaction information, the main controller controls the electric angle adjustment assembly to operate to drive the seat body 1 to tilt, e.g., to an angle suitable for a child to lie down. Similarly, after receiving an instruction indicating that the side impact block 2 moves forward relative to the seat body 1 under an external force, the interaction unit generates first interaction information. After receiving the first interaction information, the main controller controls the electric angle adjustment assembly to operate to drive the seat body 1 to straighten, e.g., to an angle suitable for a child to sit upright. The instruction indicating that the side impact block 2 moves relative to the seat body 1 under the external force is detected by the position sensor. The position sensor sends displacement information to the main controller. After receiving the displacement information, the main controller controls the motor of the electric angle adjustment component to operate. As such, the electric adjustment of the angle of the seat body 1 is achieved. The electric angle adjustment operation is the same as an electric control operation for adjusting an adult seat in a vehicle, which is easy to learn and user-friendly.

Optionally, as shown in FIG. 1 and FIG. 3, the side impact block 2 is rotatably connected to the seat body 1, the interaction unit generates second interaction information upon receiving an instruction indicating that the side impact block 2 rotates relative to the seat body 1, and upon receiving the second interaction information, the main controller controls the electric angle adjustment assembly to drive the seat body 1 to undergo electric angle straightening or electric angle tilting relative to the base.

The side impact block 2 may be rotatably connected to the seat body 1 by a rotating shaft. When the side impact block 2 rotates forward, the position sensor detects the displacement information, and the generated second interaction information is sent to the main controller. After receiving the second interaction information, the main controller controls the electric angle adjustment assembly to operate to drive the seat body 1 to straighten, e.g., to an angle suitable for a child to sit upright. When the side impact block 2 rotates backward, the position sensor detects the displacement information, and the generated second interaction information is sent to the main controller. After receiving the second interaction information, the main controller controls the electric angle adjustment assembly to operate to drive the seat body 1 to tilt, e.g., to an angle suitable for a child to lie down. The electric angle adjustment operation is the same as an electric control operation for adjusting an adult seat in a vehicle, which is easy to learn and user-friendly.

Optionally, as shown in FIG. 1 and FIG. 3, the side impact block 2 is provided with a pressing surface, a lifting surface, a first pressure sensor, and a second pressure sensor, the pressing surface is located on an upper surface of the side impact block 2, the lifting surface is located on a lower surface of the side impact block 2, the first pressure sensor is embedded below the pressing surface, the second pressure sensor is embedded above the lifting surface, the first pressure sensor and the second pressure sensor are in communication connection with the main controller, the interaction unit generates third interaction information upon receiving force information from the first pressure sensor, the main controller controls the electric angle adjustment assembly to drive the seat body 1 to undergo the electric angle tilting relative to the base upon receiving the third interaction information, the interaction unit generates fourth interaction information upon receiving force information from the second pressure sensor, and the main controller controls the electric angle adjustment assembly to drive the seat body 1 to undergo electric angle straightening relative to the base upon receiving the fourth interaction information.

The pressing surface is located on the upper surface of the side impact block 2, and is an area for the user to press. The lifting surface is located on the lower surface of the side impact block 2, and is an area for the user to lift. The first pressure sensor is embedded below the pressing surface, and is configured to detect a pressing force applied by the user and generate corresponding force information. The second pressure sensor is embedded above the lifting surface, and is configured to detect a lifting force applied by the user and generate corresponding force information. The first pressure sensor and the second pressure sensor are connected to the main controller in a wired or wireless manner. The interaction unit generates interaction information according to the detected force information and transmits the interaction information to the main controller. When the user presses the pressing surface of the side impact block 2 with a finger, the first pressure sensor detects a pressing force, generates third interaction information, and sends the third interaction information to the main controller. After receiving the third interaction information, the main controller controls the motor of the electric angle adjustment assembly to operate to drive the seat body 1 to tilt, e.g., to an angle suitable for a child to lie down. When the user lifts up the lifting surface of the side impact block 2 with a finger, the second pressure sensor detects a lifting force, generates fourth interaction information, and sends the fourth interaction information to the main controller. After receiving the fourth interaction information, the main controller controls the motor of the electric angle adjustment assembly to operate to drive the seat body 1 to straighten, e.g., to an angle suitable for a child to sit upright. In this embodiment, the angle of the seat body 1 is adjusted by operating on the pressing surface and the lifting surface. Such an operation mode is simple and intuitive, and is consistent with the natural operation habits of the user, and therefore is easy to learn and user-friendly.

Optionally, as shown in FIG. 1 and FIG. 3, the multifunctional side impact block control system further includes a base, where an electric rotary adjustment assembly is further arranged between the seat body 1 and the base, and the electric rotary adjustment assembly is in communication connection with the main controller; and the interaction unit is configured to control the child safety seat to perform the interaction action as follows: the interaction unit generates fifth interaction information upon receiving a touch and slide instruction from the side impact block 2, and upon receiving the fifth interaction information, the main controller controls the electric rotary adjustment assembly to drive the seat body 1 to undergo electric rotary adjustment relative to the base.

The communication connection between the electric rotary adjustment assembly and the main controller may also be wired connection, wireless connection, or indirect connection. The touch and slide instruction is generated by the user by touching and sliding on the surface of the side impact block 2 with a finger. In an embodiment, the electric rotary adjustment assembly may include a rotary disk, a gear, and a motor and a rotation sensor electrically connected to the main controller. The rotary disk is fixedly connected to the seat body 1. The rotary disk is provided with an inner gear ring meshing with the gear. The motor is connected to the gear. The motor is configured to drive the gear to rotate synchronously. The gear drives the rotary disk to rotate synchronously through the meshing transmission with the inner gear ring, so that the rotary disk drives the seat body 1 to rotate. The rotation sensor is configured to detect the rotation angle and position of the seat body 1, and feed back the data to the main controller. The side impact block 2 integrates a touch sensor electrically connected to the main controller and configured to detect a touch and slide operation performed by a user and generate fifth interaction information.

When a forward slide operation performed by the user is detected on the surface of the side impact block 2, the interaction unit sends the fifth interaction information to the main controller. After receiving the fifth interaction information, the main controller controls the electric rotary adjustment assembly to operate to cause the seat body 1 to rotate clockwise. When a backward slide operation performed by the user is detected on the surface of the side impact block 2, the touch sensor sends touch and slide information to the main controller. After receiving the information, the main controller controls the electric rotary adjustment assembly to operate to cause the seat body 1 to rotate counterclockwise. The direction of the slide performed by the user is naturally consistent with the direction of rotation, making the operation more intuitive and easy to learn and making the interaction friendlier.

Optionally, as shown in FIG. 1 and FIG. 3, the side impact block 2 is provided with a touch sensor, and a touch surface configured to receive a touch and slide operation performed by a user, the touch surface is located on an upper surface of the side impact block 2, the touch sensor is embedded below the touch surface, and the touch sensor is in communication connection with the main controller.

The touch surface is preferably arranged on the upper surface of the side impact block 2 to adapt to the natural operation habits of the user, and is designed as a flat and smooth area, making it convenient for the user to perform touch and slide operations. The touch sensor is embedded below the touch surface and is configured to detect a touch and slide operation performed by the user and generate corresponding fifth interaction information. The touch sensor covers the entire area of the touch surface, ensuring that any touch and slide operation on the touch surface can be accurately detected. The touch sensor is connected to the main controller in a wired or wireless manner, and transmits the generated fifth interaction information to the main controller. According to the fifth interaction information, the main controller controls the electric rotary adjustment assembly to operate, so that the motor of the electric rotary adjustment assembly drives the gear and the rotary disk. As such, the electric rotary adjustment of the seat body 1 is achieved. The electric rotary adjustment operation is simple and intuitive and is the same as an electric control operation for adjusting an adult seat in a vehicle, which is easy to learn and can better adapt to the operation habits of the user.

Optionally, as shown in FIG. 1 and FIG. 3, the multifunctional side impact block control system further includes a headrest, where an electric height adjustment assembly is arranged between the headrest and the seat body 1, and the electric height adjustment assembly is in communication connection with the main controller; and the interaction unit is configured to control the child safety seat to perform the interaction action as follows: the side impact block 2 is provided with a multi-point pressing surface, a multi-point lifting surface, a third pressure sensor, and a fourth pressure sensor, the multi-point pressing surface is located on an upper surface of the side impact block 2, the multi-point lifting surface is located on a lower surface of the side impact block 2, the third pressure sensor is embedded below the multi-point pressing surface, the fourth pressure sensor is embedded above the multi-point lifting surface, and the third pressure sensor and the fourth pressure sensor are in communication connection with the main controller; and the interaction unit generates sixth interaction information upon receiving force information from the third pressure sensor, the main controller controls the electric height adjustment assembly to drive the headrest to move downward relative to the seat body 1 upon receiving the sixth interaction information, the interaction unit generates seventh interaction information upon receiving force information from the fourth pressure sensor, and the main controller controls the electric height adjustment assembly to drive the headrest to move upward relative to the seat body 1 upon receiving the seventh interaction information.

The multi-point pressing surface is located on the upper surface of the side impact block 2, and is an area for the user to press with multiple fingers. The multi-point lifting surface is located on the lower surface of the side impact block 2, and is an area for the user to lift with multiple fingers. The third pressure sensor is embedded below the multi-point pressing surface, and is configured to detect a pressing force applied by the user and generate corresponding force information. The fourth pressure sensor is embedded above the multi-point lifting surface, and is configured to detect a lifting force applied by the user and generate corresponding force information. The third pressure sensor and the fourth pressure sensor are connected to the main controller in a wired or wireless manner to transmit the generated force information to the main controller. The electric height adjustment assembly may include a motor, a gear, a slide rail, and a height sensor. The headrest is provided with a slide block in vertical sliding fit with the slide rail and a rack meshing with the gear. The user operates the side impact block 2 through the multi-point pressing surface or the multi-point lifting surface. The third pressure sensor and the fourth pressure sensor respectively detect the pressing force and the lifting force and send the information to the main controller. The main controller controls the motor to drive the gear to rotate. The gear meshes with the rack to drive the headrest to move vertically along the slide rail, to accurately adjust the height of the headrest. When the user presses the multi-point pressing surface of the side impact block 2 with multiple fingers, the third pressure sensor detects a pressing force, generates sixth interaction information, and sends the sixth interaction information to the main controller. After receiving the sixth interaction information, the main controller controls the motor of the electric height adjustment assembly to operate to cause the headrest to move downward relative to the seat body 1. When the user lifts the multi-point lifting surface of the side impact block 2 with multiple fingers, the fourth pressure sensor detects a lifting force, generates seventh interaction information, and sends the seventh interaction information to the main controller. After receiving the seventh interaction information, the main controller controls the motor of the electric height adjustment assembly to operate to cause the headrest to move upward relative to the seat body 1.

In this embodiment, with the configuration of the multi-point pressing surface and the multi-point lifting surface, the user can to press or lift the side impact block 2 with multiple fingers to adjust the height of the headrest. Such an operation mode is simple and intuitive, and is consistent with the natural operation habits of the user, and therefore is easy to learn and user-friendly.

Optionally, as shown in FIG. 1 and FIG. 3, the entertainment unit is configured to control the side impact block 2 or the mobile terminal to play the multimedia content as follows: the side impact block 2 is configured for communication connection with the mobile terminal, a loudspeaker is built in the side impact block 2 and is in communication connection with the main controller, the main controller controls the loudspeaker to play the multimedia content upon receiving a play instruction from a user, and upon detecting that the mobile terminal is in communication connection with the side impact block 2 and receiving the play instruction from the user, the main controller controls the mobile terminal to play the multimedia content.

The side impact block 2 includes a built-in module for communication connection, which may be connected to a mobile terminal through wireless communication (e.g., Bluetooth, Wi-Fi, etc.) to exchange data, to receive a play instruction and perform multimedia content transmission. After receiving a play instruction from the user, the main controller sends a control signal to control the speaker built in the side impact block 2 to play a multimedia content. If detecting that a mobile terminal is in communication connection with the side impact block 2, the main controller may transmit a play instruction to the mobile terminal to control the mobile terminal to play the multimedia content. As such, the user can directly control the playback of multimedia content through the side impact block 2 without operating the mobile terminal, making the operation simpler and more intuitive. The speaker built in the side impact block 2 provides a direct audio output, which improves the real-time performance and convenience of multimedia content playback.

Optionally, as shown in FIG. 1 and FIG. 3, the environment adjustment unit is configured to control the side impact block 2 to perform environment adjustment as follows: a fan is built in the side impact block 2 and is in communication connection with the main controller, the side impact block 2 is further provided with an air duct in communication with outside, and upon receiving a ventilation and heat dissipation instruction, the main controller controls the fan to operate to accelerate air flow.

A fan is provided inside the side impact block 2. The fan communicates with the main controller through an electrical connection. An air duct in communication with outside is designed on the side impact block 2. The air duct is designed to guide outside air to enter the side impact block 2 and be circulated through the fan. The built-in fan and the main controller are connected through a communication module. Upon receiving a ventilation and heat dissipation instruction, the main controller can turn on or off the fan. The main controller may dynamically control the rotational speed and operation time of the fan according to a preset condition or an instruction from the user, to provide ventilation and heat dissipation.

Optionally, as shown in FIG. 1 and FIG. 3, the environment adjustment unit is configured to control the side impact block 2 to perform environment adjustment as follows: a humidifier is built in the side impact block 2 and is in communication connection with the main controller, and upon receiving a humidification instruction, the main controller controls the humidifier to operate to humidify air.

A humidifier is provided inside the side impact block 2. The humidifier communicates with the main controller through an electrical connection. A water tank or water storage unit configured to store a water source for the humidifier is designed on the side impact block 2. The built-in humidifier and the main controller are connected through a communication module. Upon receiving a humidification instruction, the main controller can turn on or off the humidifier. The main controller may dynamically control the operation time and humidification intensity of the humidifier according to a preset condition or an instruction from the user. The built-in humidifier increases the humidity in the air by generating a water mist, and can effectively alleviate the irritation of dry environment to the respiratory tract and skin of the user, thereby providing a more comfortable usage environment.

Optionally, as shown in FIG. 1 and FIG. 3, the environment adjustment unit is configured to control the side impact block 2 to perform environment adjustment as follows: the side impact block 2 is provided with a reading lamp in communication connection with the main controller, and upon receiving a turn-on instruction, the main controller controls the reading lamp to turn on to adjust ambient brightness.

The reading lamp may be a light-emitting diode (LED) light source having an adjustable brightness to meet different ambient light requirements. The reading lamp is connected to the main controller through a communication module. Upon receiving a turn-on instruction, the main controller can turn on or off the reading lamp. The main controller may dynamically control the brightness and on/off state of the reading lamp according to a preset condition or an instruction from the user. The built-in reading lamp can provide adequate lighting for the user in a dark environment, especially to meet the requirements of reading, writing, or other activities that require fine manipulation.

Optionally, as shown in FIG. 1 and FIG. 3, the safety unit is configured to control the side impact block 2 or the mobile terminal to send the occupant alert as follows: an occupant alert device is built in the side impact block 2 and is in communication connection with the main controller, the occupant alert device is configured for communication connection with the mobile terminal, and when the occupant alert device is in communication connection with the mobile terminal and the main controller determines that a distance between the occupant alert device and the mobile terminal exceeds a preset alert distance, the main controller controls the occupant alert device to send the occupant alert.

The occupant alert device has a sound alarm function and/or a vibration alarm function to ensure that an effective alarm can be provided to the user in different environments. The occupant alert device is connected to a mobile terminal through a wireless communication module (e.g., Bluetooth, Wi-Fi, etc.) to implement real-time data transmission. The mobile terminal has a built-in positioning function for calculating the distance between the mobile terminal and the occupant alert device. The main controller continuously monitors the distance between the occupant alert device and the mobile terminal, and triggers an alarm when detecting that the distance exceeds a preset alarm distance (e.g., 10 meters). According to a preset alarm condition, the main controller may control the occupant alert device to send out a sound alarm or a vibration alarm to remind the user, thereby preventing the user from leaving a child in the child safety seat.

If the occupant alert device is configured as an electronic communication module built in the side impact block 2, the occupant alert device can be connected to a mobile phone, and determine the distance between the mobile phone and the side impact block 2 according to communication strength between the mobile phone and the side impact block 2. If the occupant alert device is configured as an external electronic communication module, the occupant alert device may be worn by the user, and the side impact block 2 determines whether there is a child left in the child safety seat according to the distance between the side impact block 2 and the external electronic communication module and an occupant status of the child safety seat. Methods for detecting the state of the body of the child safety seat may include: occupant status detection, i.e., detecting through a sensor (e.g., a pressure sensor) whether there is a child in the child safety seat; living body detection, i.e., detecting whether there is a living body in the child safety seat according to a microwave signal detected by a built-in microwave radar or a carbon dioxide concentration detected by a built-in carbon dioxide sensor; and door status detection, i.e., determining through a built-in infrared sensor, laser sensor, or ultrasonic radar whether the door of the vehicle close to the mounting position of the body of the child safety seat is open or closed.

In this embodiment, the main controller monitors the communication intensity between a mobile phone or an external electronic communication module and the side impact block 2 in real time through a built-in communication electronic module, and when detecting that the distance exceeds the preset alarm distance, determines according to the occupant status of the child safety seat whether to send an occupant alert. Through the microwave radar, the carbon dioxide sensor, the infrared sensor, the laser sensor, or the ultrasonic radar, the main controller can comprehensively determine the presence of a child and the status of the door of the vehicle, to ensure that an alarm can be sent in a timely manner when there is a child left in the child safety seat.

Optionally, as shown in FIG. 1, FIG. 2, and FIG. 3, the multifunctional side impact block control system further includes a base, where an electric rotary adjustment assembly is further arranged between the seat body 1 and the base, and the electric rotary adjustment assembly is in communication connection with the main controller; and the welcoming unit is configured to control the child safety seat to perform the welcoming action as follows: an infrared sensor is built in the side impact block 2 and is in communication connection with the main controller, and when the infrared sensor detects that a door of a vehicle is opening, the main controller controls the electric rotary adjustment assembly to operate to cause the seat body 1 to rotate toward the door.

The base is a basic structure of the child safety seat, and serves to support the entire child safety seat and provide a platform for mounting the electric rotary adjustment assembly. When the infrared sensor detects that the door of the vehicle is opening, the main controller controls the electric rotary adjustment assembly to operate to cause the seat body 1 to rotate toward the door, making it convenient for a child to get in or out of the vehicle and improving the user experience. Through the automatic control of the electric rotary adjustment assembly, there is no need to manually adjust the seat, which reduces the burden on parents and provides great convenience especially for the user holding a child or carrying an item with both hands. The design of the welcoming action not only improves the intelligence level of the seat, but also gives a feeling of high-tech and increases user satisfaction.

In addition to the infrared sensor, a laser sensor may also be used to accurately detect whether a door of the vehicle is open or closed, or an ultrasonic radar may also be used to detect an obstacle in the vicinity of a door of the vehicle and a status of the door. The child safety seat may also be equipped with a built-in child seating sensor to detect whether a child is seated correctly. The child safety seat may also be equipped with a buckle sensor, which is mounted at a buckle of a seat belt of the child safety seat to detect whether the seat belt is correctly fastened. In this embodiment, the welcoming unit is used in combination with an in-vehicle infotainment system and various sensors to accurately detect the status of the vehicle and the status of the child safety seat and implement an intelligent welcoming action. The seat not only can automatically rotate toward the door of the vehicle to make it convenient for a child to get in or out of the vehicle when the user opens the door, but also can automatically adjust its orientation in scenarios such as where the vehicle stalls and stops, thereby improving the convenience of use.

Optionally, the side impact block 2 is provided with an indication module, and the indication module is in communication connection with the main controller.

The indication module may be embodied in the form of an indicator light, an ambient light, a display screen, voice broadcast, etc. to provide a real-time status feedback and operation prompt. The indicator light and the ambient light may be embedded on the side impact block 2 to present status information to the user through different colors and light flow effects. For example, an LED light strip or bar is embedded on the side impact block 2. The LED light strip or bar can display different colors and light flow effects, which are respectively consistent with action directions of electric functions, to provide an intuitive visual feedback. For example, a heating action is indicated by a warm color, a ventilation action is indicated by a cool color, and alarming is indicated by red alarm light. The direction of light flow may be consistent with the adjustment direction of the seat. For example, forward adjustment of the seat is indicated by light flowing forward, and backward adjustment of the seat is indicated by light flowing backward. As such, a more intuitive operation and friendly interaction are achieved. The side impact block 2 integrates a small display screen to display status information of the seat in real time. The side impact block 2 implements a voice broadcast function through the built-in speaker or an in-vehicle audio system connected thereto.

Another embodiment of the present invention provides a child safety seat, including the multifunctional side impact block control system described above.

According to the child safety seat of this embodiment, the side impact block 2 movably mounted on the side surface of the seat body 1 can be easily operated by the user whether inside or outside the vehicle, making the interaction more intuitive and providing a control region that better meets the requirements in practical applications, thereby facilitating user operation. The integration of the functional module in the side impact block 2 allows for the integration of functions such as electric function interaction, occupant alert, welcome, entertainment, environment adjustment, and the like in the side impact block 2, thereby achieving diversified functions of the side impact block 2 and improving the intelligent level of the system. With the modular design of the system, each functional module can be independently developed and maintained, thereby reducing the production and maintenance costs.

Although the present invention has been disclosed above, the scope of protection of the present invention is not limited thereto. Those skilled in the art can make various changes and modifications without departing from the spirit and scope of the present invention. Such changes and modifications also fall within the scope of protection of the present invention.

## Claims

1. A multifunctional side impact block control system, comprising a seat body (1), a side impact block (2) movably mounted on at least one of a left side surface or a right side surface of the seat body (1), a main controller, and a functional module integrated in the side impact block (2), wherein the side impact block (2) and the functional module are in communication connection with the main controller; the functional module comprises one or more of an interaction unit, an entertainment unit, an environment adjustment unit, a safety unit, or a welcoming unit; wherein the interaction unit is configured to control a child safety seat to perform an interaction action; the entertainment unit is configured to control the side impact block (2) or a mobile terminal to play a multimedia content; the environment adjustment unit is configured to control the side impact block (2) to perform environment adjustment; the safety unit is configured to control the side impact block (2) or the mobile terminal to send an occupant alert; and the welcoming unit is configured to control the child safety seat to perform a welcoming action.

2. The multifunctional side impact block control system according to claim 1, further comprising a base, wherein an electric rotary adjustment assembly is further arranged between the seat body (1) and the base, and the electric rotary adjustment assembly is in communication connection with the main controller; and the interaction unit is configured to control the child safety seat to perform the interaction action as follows: the interaction unit generates fifth interaction information upon receiving a touch and slide instruction from the side impact block (2), and upon receiving the fifth interaction information, the main controller controls the electric rotary adjustment assembly to drive the seat body (1) to undergo electric rotary adjustment relative to the base; and
the side impact block (2) is provided with a touch sensor, and a touch surface configured to receive a touch and slide operation performed by a user, the touch surface is located on an upper surface of the side impact block (2), the touch sensor is embedded below the touch surface, and the touch sensor is in communication connection with the main controller.

3. The multifunctional side impact block control system according to claim 1, further comprising a headrest, wherein an electric height adjustment assembly is arranged between the headrest and the seat body (1), and the electric height adjustment assembly is in communication connection with the main controller; and the interaction unit is configured to control the child safety seat to perform the interaction action as follows: the side impact block (2) is provided with a multi-point pressing surface, a multi-point lifting surface, a third pressure sensor, and a fourth pressure sensor, the multi-point pressing surface is located on an upper surface of the side impact block (2), the multi-point lifting surface is located on a lower surface of the side impact block (2), the third pressure sensor is embedded below the multi-point pressing surface, the fourth pressure sensor is embedded above the multi-point lifting surface, and the third pressure sensor and the fourth pressure sensor are in communication connection with the main controller; and the interaction unit generates sixth interaction information upon receiving force information from the third pressure sensor, the main controller controls the electric height adjustment assembly to drive the headrest to move downward relative to the seat body (1) upon receiving the sixth interaction information, the interaction unit generates seventh interaction information upon receiving force information from the fourth pressure sensor, and the main controller controls the electric height adjustment assembly to drive the headrest to move upward relative to the seat body (1) upon receiving the seventh interaction information.

4. The multifunctional side impact block control system according to claim 1, wherein the entertainment unit is configured to control the side impact block (2) or the mobile terminal to play the multimedia content as follows: the side impact block (2) is configured for communication connection with the mobile terminal, a loudspeaker is built in the side impact block (2) and is in communication connection with the main controller, the main controller controls the loudspeaker to play the multimedia content upon receiving a play instruction from a user, and upon detecting that the mobile terminal is in communication connection with the side impact block (2) and receiving the play instruction from the user, the main controller controls the mobile terminal to play the multimedia content.

5. The multifunctional side impact block control system according to claim 1, wherein the environment adjustment unit is configured to control the side impact block (2) to perform the environment adjustment according to at least one of the following:
a fan is built in the side impact block (2) and is in communication connection with the main controller, the side impact block (2) is further provided with an air duct in communication with outside, and upon receiving a ventilation and heat dissipation instruction, the main controller controls the fan to operate to accelerate air flow;
a humidifier is built in the side impact block (2) and is in communication connection with the main controller, and upon receiving a humidification instruction, the main controller controls the humidifier to operate to humidify air; or
the side impact block (2) is provided with a reading lamp in communication connection with the main controller, and upon receiving a turn-on instruction, the main controller controls the reading lamp to turn on to adjust ambient brightness.

6. The multifunctional side impact block control system according to claim 1, wherein the safety unit is configured to control the side impact block (2) or the mobile terminal to send the occupant alert as follows: an occupant alert device is built in the side impact block (2) and is in communication connection with the main controller, the occupant alert device is configured for communication connection with the mobile terminal, and when the occupant alert device is in communication connection with the mobile terminal and the main controller determines that a distance between the occupant alert device and the mobile terminal exceeds a preset alert distance, the main controller controls the occupant alert device to send the occupant alert.

7. The multifunctional side impact block control system according to claim 1, further comprising a base, wherein an electric rotary adjustment assembly is further arranged between the seat body (1) and the base, and the electric rotary adjustment assembly is in communication connection with the main controller; and the welcoming unit is configured to control the child safety seat to perform the welcoming action as follows: an infrared sensor is built in the side impact block (2) and is in communication connection with the main controller, and when the infrared sensor detects that a door of a vehicle is opening, the main controller controls the electric rotary adjustment assembly to operate to cause the seat body (1) to rotate toward the door.

8. The multifunctional side impact block control system according to any one of claims 1 to 7, further comprising a base, wherein an electric angle adjustment assembly is arranged between the seat body (1) and the base, and the electric angle adjustment assembly is in communication connection with the main controller; and the interaction unit is configured to control the child safety seat to perform the interaction action as follows: the interaction unit generates eighth interaction information upon receiving an instruction indicating that the side impact block (2) moves relative to the seat body (1), and upon receiving the eighth interaction information, the main controller controls the electric angle adjustment assembly to drive the seat body (1) to undergo electric angle adjustment relative to the base.

9. The multifunctional side impact block control system according to claim 8, wherein at least one of:
the side impact block (2) is slidably connected to the seat body (1) along a length direction of the side impact block (2), the interaction unit generates first interaction information upon receiving an instruction indicating that the side impact block (2) moves forward or backward relative to the seat body (1), and upon receiving the first interaction information, the main controller controls the electric angle adjustment assembly to drive the seat body (1) to undergo electric angle straightening or electric angle tilting relative to the base;
the side impact block (2) is rotatably connected to the seat body (1), the interaction unit generates second interaction information upon receiving an instruction indicating that the side impact block (2) rotates relative to the seat body (1), and upon receiving the second interaction information, the main controller controls the electric angle adjustment assembly to drive the seat body (1) to undergo the electric angle straightening or the electric angle tilting relative to the base; or
the side impact block (2) is provided with a pressing surface, a lifting surface, a first pressure sensor, and a second pressure sensor, the pressing surface is located on an upper surface of the side impact block (2), the lifting surface is located on a lower surface of the side impact block (2), the first pressure sensor is embedded below the pressing surface, the second pressure sensor is embedded above the lifting surface, and the first pressure sensor and the second pressure sensor are in communication connection with the main controller; the interaction unit generates third interaction information upon receiving force information from the first pressure sensor, the main controller controls the electric angle adjustment assembly to drive the seat body (1) to undergo the electric angle tilting relative to the base upon receiving the third interaction information; the interaction unit generates fourth interaction information upon receiving force information from the second pressure sensor, and the main controller controls the electric angle adjustment assembly to drive the seat body (1) to undergo the electric angle straightening relative to the base upon receiving the fourth interaction information.

10. A child safety seat, comprising the multifunctional side impact block control system according to any one of claims 1 to 9.
